(19) Europäisches Patentamt
European Patent Office
Office européen des brevets

(11) Publication number: 0 180 095 B1

(12) # EUROPEAN PATENT SPECIFICATION

(45) Date of publication of patent specification: **23.12.92** (51) Int. Cl.5: **B60T 8/00**

(21) Application number: **85113147.4**

(22) Date of filing: **16.10.85**

(54) **Wheel slip controlling system for a vehicle.**

(30) Priority: **30.10.84 JP 228538/84**

(43) Date of publication of application:
**07.05.86 Bulletin 86/19**

(45) Publication of the grant of the patent:
**23.12.92 Bulletin 92/52**

(84) Designated Contracting States:
**DE GB**

(56) References cited:
**EP-A- 0 064 669**
**DE-A- 3 127 302**
**US-A- 3 861 758**
**US-A- 3 938 611**
**US-A- 4 402 047**

(73) Proprietor: **TOYOTA JIDOSHA KABUSHIKI KAISHA**
**1, Toyota-cho Toyota-shi**
**Aichi-ken 471(JP)**

(72) Inventor: **Ohashi, Kaoru**
**36-3 Yokodaito Miai-cho**
**Okazaki-shi Aichi-ken(JP)**
Inventor: **Kobayashi, Ikuya**
**6-79-12, Akiba-cho**
**Toyota-shi Aichi-ken(JP)**
Inventor: **Nogami, Takahiro**
**3-12, Izumi-cho 3-chome**
**Toyota-shi Aichi-ken(JP)**
Inventor: **Shirai, Akira**
**5-4, Futamuradai 4-chome**
**Toyoake-shi Aichi-ken(JP)**
Inventor: **Nakamura, Kazumasa**
**71 Aza-yoshiden Taki-cho**
**Okazaki-shi Aichi-ken(JP)**
Inventor: **Nomura, Yoshihisa**
**1-38, Inoue-cho 11-chome**
**Toyota-shi Aichi-ken(JP)**

(74) Representative: **Pellmann, Hans-Bernd, Dipl.-Ing. et al**
**Patentanwaltsbüro Tiedtke-Bühling-Kinne-Grupe-Pellmann-Grams-Struif**
**Bavariaring 4**
**W-8000 München 2(DE)**

EP 0 180 095 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

#### Field of the Invention

This invention relates to a wheel slip controlling system for a vehicle for controlling a frictional force between a tire of a driven wheel and the road surface not only during braking but also during acceleration of a vehicle, and more particularly a wheel slip controlling system to control rotation of a driven wheel by brake mechanism as well as to control an output power of an internal combustion engine.

#### Prior Art

Traction controlling systems are conventionally known which control the rotation of a wheel during acceleration of a vehicle to provide a maximum frictional force between a tire of the wheel and the road surface so as to improve the stability and acceleration.

Document DE-A-31 27 302 discloses a system for controlling the propulsive drive applied to motor vehicle wheels, particularly having hydraulically operated disk brakes, in the sense of preventing undesired spinning of the driven wheels in order to obtain a desired vehicle behaviour in critical driving situations, especially under extreme road conditions. In the system, a comparator is provided which is triggered by at least one presettable or permanently preset threshold value corresponding to the speed of the vehicle, and which generates an output signal causing the drive torque to be reduced as soon as the threshold value is exceeded and a signal is present, which indicates that the individual wheel brake is being activated and/or that one of the driven wheels is tending to spin. The control system comprises a first control loop which reacts to the state of motion of at least the driven vehicle wheels and which, when one of these wheels is tending to spin, activates its wheel brake, and comprises a second control loop applying a torque-reducing control action to the drive unit of the vehicle when values preferably being determined from the wheel rotation speeds of the undriven vehicle wheels and representing the speed and the acceleration of the vehicle exceed the threshold value. The threshold value of the speed of the vehicle which value governs the control process, is preferably regulated in accordance with the transverse acceleration which acts on the vehicle whenever it follows a curved path, thus performing a control of the vehicle behaviour depending on the detected vehicle speed and being additionally adapted to the vehicle cornering state. This document also discloses the use of a conventional anti-skid brake system in combination with the mentioned wheel slip control.

Furthermore, document EP-A-0 064 669 discloses an acceleration slip control system of a vehicle which comprises detecting means to detect the rotational speed of the driven and undriven vehicle wheels and actuators to vary the output torque of the engine applied to the driven vehicle wheels and to adjust the braking force of the individual wheel brakes of the driven wheels. A reference value in the form of an arithmetic mean value of the rotation speed of the driven vehicle wheels is compared to the rotational speed of the undriven vehicle wheels. If the result of this comparison exceeds a reference value previously calculated, the output torque of the engine is reduced by adjusting the throttle valve of the engine accordingly. Furthermore, the rotational speed of each driven wheel is also compared with the reference value and the individual wheel brake of the driven wheel having the highest rotational speed is activated in order to reduce the acceleration slip of the respective driven vehicle wheel.

In this kind of traction controlling system, normally, considered is such a system as detecting the state of slipping of a driven wheel and controlling the power of internal combustion engine by controlling the elements like ignition timing or fuel injection amount so as to control the rotation of a driven wheel when the degree of slipping is above a predetermined value.

However, there are the following problems with the wheel slip controlling systems mentioned above, thus, they are regarded as insufficient.

Namely, the conventional wheel slip controlling systems aim at the prevention of slip during acceleration by reducing the fuel injection amount or setting a time lag against a change in the ignition timing so as to control the output of the internal combustion engine. In this case, there is such a problem as the control capacity being limited, taking preventive measures against abnormal vibration, or stop due to abrupt changes in the operating conditions of engine.

On the other hand, when the intake air amount is controlled, the ignition timing and the fuel injection amount, etc. are decided in accordance with it. Therefore, the output power of internal combustion engine can be controlled smoothly to improve the drivability. But if the position of the throttle valve interlocked to the accelerator pedal is controlled against the stepped pedal, some problems may occur, for example, giving discomfort like kickback to the driver, or incapability of keeping stability in case of failure with control parts of the throttle valve.

In addition, another problem, that is, the rotation of driven wheels cannot be controlled immediately because of the bad responsitivity, should be pointed out when the output power of internal combustion engine is used for controlling the rotation of driven wheels in the case above. Accordingly, it is possible to control the rotation of driven wheels directly by using the brake system mounted on the vehicle, when the slip of driven wheels occurs during acceleration operation and the rotation of them must be controlled instantly. But a special brake system will be required to control the rotation of driven wheels by using the brake system only. Namely, if the driving force is rather great, for example, the gear position of transmission being set at the first speed, the special brake system which produces greater braking force will be necessary to give the corresponding braking force against the driving force. The conventional brake system may not work well. Also, the pressure source will be required for the purpose of increasing hydraulic pressure supplied to braking cylinder equipped with the driven wheels of the control system for a vehicle. Therefore, other devices like oil pump, etc. must be added to the conventional vehicle.

## SUMMARY OF THE INVENTION

The objective of the present invention is to solve the above-mentioned problems once for all and offer a wheel slip controlling system capable of carrying out the fine control without any decrease in drivability and safety of vehicles as well as any delay in control when the slip of driven wheels occurs during acceleration operation.

The second objective of the present invention is to offer a wheel slip controlling system wherein the slip of driven wheels during acceleration operation can be controlled by a brake system with quick response and the second throttle valve which controls the intake air amount in longer period.

It is the third objective of the present invention is to offer a wheel slip controlling system wherein the braking force necessary for the brake mechanism is reduced by employing the two means for controlling the rotation of driven wheels together so as to be capable of not only reducing the system in size and weight but achieving the saving of fuel consumption.

The fourth objective of the present invention is to offer a wheel slip controlling system whose constitution is superior in various points, e.g., capability of conducting the fine control of braking force with simplified structure by utilizing the anti-skid control system for brake mechanism, etc.

The fifth objective of the present invention is to offer a wheel slip controlling system wherein security will be kept by adjusting the intake air amount with the first throttle valve operated during a driver's acceleration operation even if the throttle valve drive device is out of order, as the output power of internal combustion engine is reduced by the second throttle valve.

According to the present invention these objects are accomplished by a wheel slip controlling system for a vehicle, comprising:

(a) braking means operable by a driver of a car for braking rotation of driven wheels,

(b) slip detecting means for detecting a slipping condition of wheels at least including the driven wheels to output a slip signal indicative of the slipping condition,

(c) anti-skid controlling means for receiving said slip signal indicative of the slipping condition and controlling the pressure to be imparted from said braking means to control braking slips of said wheels at least including said driven wheels,

(d) traction controlling means responsive to the slip signal output from said slip detecting means during the acceleration of said vehicle to control an acceleration slip of said driven wheels,

**said wheel slip controlling system being characterized in that**

(e) a second throttle valve is placed at an intake air path in which is also provided a first throttle valve interlocked to an acceleration increase means, and

(f) said traction controlling means controls both said second throttle valve to vary the engine output torque and the hydraulic pressure of said anti-skid control means, in accordance with the slip signal so as to control an acceleration slip.

Accordingly, the wheel slip controlling system according to the present invention uses a traction control which includes a combination of an anti-skid control of the vehicle wheels by adjusting the braking force to the vehicle wheels in accordance with the detected slip condition and a further traction control on the basis of adjusting the output power of the internal combustion engine applied to the driven vehicle wheels. To this end, a hydraulic anti-skid control means in the form of a known anti-blocking system is used to provide the required hydraulic pressure for the individual hydraulic wheel brakes to apply a predetermined braking force in response to the slip signal output from the slip detecting means. In addition, a second throttle valve is provided in the intake air path of the engine to automatically vary and adjust the output power of the engine in accordance with the slip signal indicating a present slip condition. The output power of the engine is reduced appropriately and independently of the position of the main throttle valve which is entirely subject to the driver's will. The position of only the second throttle valve is automatically adjusted in response to the slip signal, whereas the position of the main throttle valve is maintained by the driver. Thus, the main throttle valve is not automatically varied in its position and the automatic variation of the second throttle valve will not cause any inconvenience to the driver during an intended acceleration of the vehicle when depressing the accelerator pedal which is interlocked to the main throttle valve. Moreover, even if a motor, serving to adjust the second throttle valve on the basis of control signals output from the traction controlling means fails, the driver can manually operate the accelerator pedal to safely control the intake air amount of the engine.

Hence, in addition to the wheel slip control by means of the individual wheel brakes an acceleration slip of the driven wheels can be effectively prevented by controlling the second throttle valve independently of the main throttle valve on the basis of the present driving conditions of the vehicle in order to ensure the elimination of the detected acceleration slip of the driven wheels.

With reference to Fig. 1, the slip detecting means M3 detects the degree of slipping in relation to road surfaces when a driven wheel M1 is in the state of acceleration. Therefore, accepted is such means as detecting the difference of rotation states between a non-driven wheel and a driven wheel M1, or comparing the actual rotation speed of a driven wheel M3 with the theoretical value of rotation state of the driven wheel M1 without excessive slipping.

The rotation controlling means controls the rotation of the driven wheel M1. There are two control means, namely, the second throttle valve M7 operated by a driver, which is provided to the intake air path so as to control the intake air amount like the first throttle valve M6 and the brake mechanism provided with anti-skid controlling means M4 which changes the braking force supplied to the driven wheel M1 properly when slip occurs during deceleration operation. In other words, in the system, the output power of the internal combustion engine which operates the driven wheel M1 is decreased by the second throttle valve M7 so as to control the rotation of the driven wheel M1. Also, the control is carried out by giving the braking force against the rotation of the driven wheel M1 with anti-skid controlling means M4.

Traction controlling means M8 operates the rotation controlling means when it judges the state of slipping as beyond the capacity of the driven wheel M1 during an acceleration operation on the basis of the detected results by the slip detecting means M3. So when the traction controlling means M8 decides that the excessive rotation force is given to the driven wheel M1, it operates the second throttle valve M7 to decrease the driving force of the driven wheel M1, in addition, the braking mechanism of anti-skid controlling means M4 is activated to give the braking force to the driven wheel M1.

Now, in order to have the present invention understood more concretely, the invention will be described in more detail in connection with preferred embodiments thereof.

## BRIEF DESCRIPTION OF THE DRAWINGS

Fig. 1 is a diagram illustrating a basic construction of the present invention;

Fig. 2 is a block diagram illustrating construction of a first embodiment;

Fig. 3 is a flow chart of a control program for the system of Fig. 2;

Fig. 4 is a timing chart of control of the system of Fig. 2; and

Fig. 5 is a block diagram illustrating a microcomputer section of the first embodiment when constructed by electronic circuits.

## DETAILED DESCRIPTION OF THE PREFERRED EMBODIMENTS

Fig. 2 is a schematic diagram of a braking hydraulic system and a controlling system therefor in a vehicle on which a wheel slip controlling system of a first embodiment of the present invention is installed.

In Fig. 2, numeral 1 denotes an engine, numeral 2 denotes a piston, 3 for a spark plug, 4 for a suction valve, 5 for a fuel injector, 6 for a surge tank, 7 for an air-flow meter, 8 for an air cleaner. In addition to a first throttle valve 10 which is prepared conventionally and ajusts the intake air amount interlocked to an accelerator pedal 9, a second throttle valve 14 which adjusts the intake air amount like the first throttle valve 10 and is driven by a DC motor 12 is provided to an intake air path between the air-flow meter 7 and the surge tank 6.

The second throttle valve 14 is in the state of full open under the normal condition. The position of the second throttle valve 14 is controlled from the full open to the full close position so as to control the output power of internal combustion engine 1 and carry out the slip control only when the traction control is executed.

Referring to Fig. 2, reference numeral 20 denotes a hydraulic system of a conventional anti-skid brake system and 30 a hydraulic system newly provided afresh for traction control. In particular, if a foot brake 50 is treaded to operate a master cylinder 51 of the tandem type, a braking force is produced at both of left and right front wheels FL, FR and left and right rear wheels RL, RR or M1 corresponding to a hydraulic pressure, and the hydraulic system 20 of an anti-skid brake system for suitably varying the hydraulic pressure of the hydraulic circuit is provided in the hydraulic circuit. Fig. 2 shows only a hydraulic oil path for the rear wheels RR and RL in detail for simplification.

Rotational speeds of the front and rear wheels FR, FL, RR and RL to which a braking force is applied in such a manner as described above are detected by a vehicle or car speed sensor 60A and a wheel speed sensor 60B and are transmitted to an electronic controlling device 90. The car speed sensor 60A calculates an average of rotational speeds of the left and right front wheels FL and FR and thus outputs a signal which is regarded as a travelling speed of the vehicle while the wheel speed sensor 60B outputs a signal indicative of a rotational speed of a driven wheel only.

Now, detailed construction of each system will be described.

At first, the hydraulic system 20 of the anti-skid brake system includes a cut valve 24 to which a flow of oil is changed over by means of a magnetic change-over valve in the form of a three position solenoid valve 23 from a hydraulic source of an accumulator 22 which stores therein oil to be fed under pressure by a hydraulic pump 21, a bypass valve 25 for assuring operation of the braking hydraulic circuit when the hydraulic source gets out of order and so on, a reservoir 26 for temporarily storing excessive oil therein, and a hydraulic switch 27 for detecting a hydraulic pressure of the hydraulic source to provide an output when a predetermined hydraulic pressure is obtained.

Fig. 2 indicates the hydraulic system 20 when the anti-skid brake system does not operate. A piston of the bypass valve 25 is normally held upward by oil pressure from the accumulator 22 which is maintained at a high pressure by the pump 21 so that oil from a pressure change-over valve 31 which will be hereinafter described does not go into the bypass valve 25 and all flows into the cut valve 24. At this instant, a piston of the cut valve 24 is also held upward since the three position valve 23 is connected at an A port thereof to the cut valve 24. The upward pressure of the accumulator 22 is higher than the pressure of the pressure change-over valve 31, and accordingly oil which flows into the cut valve 24 from the pressure change-over valve 31 goes out of an upper chamber of the cut valve 24, passing a bypass path 28 and then an upper chamber of the bypass valve 25, and provides a braking force to the driven wheels RR and RL.

In other words, the bypass valve 25 only acts as a bypass hydraulic path which imparts a braking force to driven wheels RR and RL via an upper chamber of the bypass valve 25 so far as the hydraulic pressure from the accumulator 22 is normal while the cut valve 24 holds the capacity of the upper chamber thereof to its minimum and unchangeable when the three position valve 23 is connected at the A port thereof to the cut valve 24 so that the braking hydraulic pressure can be controlled only by a pressure of the pressure change-over valve 31.

If the anti-skid brake system discriminates in response to some signal that it is necessary to reduce the hydraulic pressure imparted from the pressure change-over valve 31 to the driven wheels RR and RL to reduce the braking force thereof, the electronic controlling device 90 actuates the three position valve 23 to connect a C port of the latter to the hydraulic systems 20. Then, the pressure in a lower chamber below the piston of the cut valve 24 becomes equal to the low pressure of the reservoir 26, and as a result, the piston is pushed down by the pressure of the pressure change-over valve 31 to increase the volume of oil and lower the hydraulic pressure in the upper chamber of the cut valve 24 which has provided the braking force to the driven wheels RR and RL, resulting in reduction in the braking force. Then, if a B port of the three position valve 23 is connected to the hydraulic system 20 after the piston of the cut valve 24 has been lowered to a position at which a suitable braking force can be obtained, then the movement of the piston of the cut valve 24 will be ended and the pressure in the upper chamber of the cut valve 24 which provides a braking force will be fixed.

In the meantime, if the hydraulic system 20 of the anti-skid brake system becomes out of order by any reason so that the pressure of the accumulator 22 becomes low, then the piston of the bypass valve 25 moves down so that a spherical valve at the top of the piston divides a valve body into an upper chamber and a lower chamber while the cut valve 24 is divided into two upper and lower chambers as the piston thereof moves down. Then, the pressure of the pressure change-over valve 31 is introduced directly into the upper chamber of the bypass valve 25 to form a new hydraulic system 30 which will provide a braking force to the driven wheels RR and RL to assure a braking operation at least based upon a will of a driver.

Now, the hydraulic system 30 which is provided anew for traction control will be described. At first, while a hydraulic system of a conventional anti-skid brake system is constructed such that pressure oil from the master cylinder 51 of the foot brake 50 is directly introduced into the cut valve 24 and the bypass valve 25, the pressure change-over valve 31 is provided anew in the hydraulic system 30 such that oil pressure may be introduced into the two valves 24 and 25 via the pressure change-over valve 31. The pressure change-over valve 31 is a valve of the 2-input 1-output type which selectively outputs one of two inputs which is higher in pressure than the other. The master cylinder 51 of the foot brake 50 is connected to one of the two inputs of the pressure change-over valve 31 while another cylinder 32 is connected to the other input. The above described accumulator 22 serves as a power source for operating the cylinder 32, and a two position valve 33 which is controlled by the electronic controlling device 90 intermits connection between the accumulator 22 and the cylinder 32.

The electronic controlling device 90 detects a condition of the braking hydraulic system 20 as described above and produces a controlling output depending upon such detection. In particular, the electronic controlling device 90 receives three output signals from the car speed sensor 60A, the wheel speed sensor 60B and the hydraulic switch 27 as detection information of the braking hydraulic system 20 and controls the pump 21, the three position valve 23 and the two position valve 33 within the hydraulic system 20 and the DC motor 12 in accordance with results of such detection. Fig. 2 illustrates a block diagram wherein the electronic controlling device 90 is constructed as an example from digital circuits including a microcomputer at the center thereof. Referring to Fig. 2, reference symbol 90A-1 denotes a CPU which carries out operation, 90A-2 a ROM which stores a controlling program and various constants therein, 90A-4 an input/output port which outputs controlling signals for operating the DC motor 12, several hydraulic valves and the pump 21 in the braking hydraulic system 20 and which shapes and receives a signal from the hydraulic switch 27, 90A-5 an input port which receives signals from the two speed sensors 60A and 60B, and 90A-6 a bus line forming a passage of information.

The wheel slip controlling system of the present embodiment having such a construction as described above operates in accordance with a flow chart illustrated in Fig. 3. The flow chart indicates a wheel slip controlling routine which is stored in prior in the ROM 90A-2 and is executed repeatedly every predetermined period of time to control a slip of wheels.

If the CPU 90A-1 advances into a process of the wheel slip controlling routine, at first step 100 is executed to discriminate if the pressure of the hydraulic system is normal or not. The pressure of the accumulator 22 of the anti-skid brake system, i.e. the braking hydraulic system 20, is detected by the hydraulic switch 27 as described hereinabove, and if the pressure lowers, the hydraulic switch 27 will provide no output. Thus, the output of the hydraulic switch 27 is monitored, and if there is no output from the hydraulic switch 27, step 110 is once executed to operate the pump 21 to raise the pressure of the accumulator 22 until there appears an output of the hydraulic switch 27 again. On the contrary, if there is an output of the hydraulic switch 27 and thus the pressure is discriminated as normal, there is no necessity of executing the process of step 110 and control advances directly to next step 120.

A step 120, it is discriminated if the vehicle is now being accelerated or decelerated. In particular, acceleration is calculated from a frequency of pulse signals from the car speed sensor 60A and it is discriminated if a result of the calculation is equal to or over zero. And if it is discriminated that the result is equal to or over zero, that is, the vehicle is being accelerated, control advances to step 130 to execute a following traction control. On the contrary, if it is discriminated that the result is below zero and the vehicle is being decelerated, then step 140 is executed to reset a counter C which is used in the traction control as hereinafter described whereafter the present routine is finished and another routine for a conventional anti-skid control(not shown) will be executed.

At step 130, as a first discrimination for executing the traction control, it is discriminated if the driven wheels RR and RL are rotating at higher speed than an upper limit value for the driven wheel rotational speed. Here, the upper limit value means a speed represented by a line Vh illustrated in (A) of Fig. 4 and is a rotational speed at which a maximum frictional force acts on the driven wheels RR and RL as calculated from the detection result Vc of the car speed sensor 60A, that is, an upper limit value within a range of rotational speed of the driven wheels RR and RL at which the slip ratio becomes - 10% or so. Reference symbol $V\ell$ in (A) of Fig. 4 indicates a lower limit value of the range. If at step 130 the detection result Vr of the wheel speed sensor 60B which is the rotational speed of the driven wheels RR and RL is discriminated as $Vr \geqq Vh$, then step 150 is executed to set the counter C to a predetermined positive integer to drive the second throttle valve 14 toward the close side by the DC motor 12 and then at the following step 160, a changing over operation is executed to change over the two position valve 33 to a pressurizing side wherein the pressure of the accumulator 22 is imparted to the pressure change-over valve 31. By this changing over operation, the output power of the internal combustion engine 1 which drives the driven wheels RL and RR is kept low and a braking pressure is applied to the cut valve 24 so that a braking force acts upon the driven wheels RR and RL.

Then, step 170 is executed to discriminate if the rotational speed Vr and the acceleration $\alpha r$ of

the driven wheel RL exceed their respective upper limit values. Here, the upper and lower limit values of the acceleration αr mean predetermined values αh and αℓ as respectively, illustrated in (B) of Fig. 4, and represent upper and lower limit values of the acceleration αr which can assume while a large frictional force is maintained between the driven wheels RR and RL and the road surface as estimated from the weight of the vehicle, a load to the driven wheels RR and RL, and so on. Accordingly, when the condition of step 170 is met, the rotation of the driven wheels RR and RL involves a large slip, and thus step 180 is executed to carry out a changing over control to the A port of the three position valve 23 wherein pressurization from the pressure change-over valve 31 to the cut valve 24 all acts as a braking force.

On the contrary, if at step 170 it is not discriminated that the condition is met, it is discriminated at 190 if the actual rotational speed Vr and acceleration αr of the driven wheels RR and RL are higher or not than the lower limit values Vℓ and αℓ for the speed and acceleration, respectively. Thus, if they are discriminated as higher, then the magnitude of a braking force to the driven wheels RR and RL is regarded as suitable at present and the three position valve 23 is changed over to the B port to maintain constant volume of the upper chamber which imparts the braking force of the cut valve 24 (step 200). Conversely, if it is discriminated at step 190 that either one or both of the speed Vr and the acceleration αr are below the lower limit value or values Vℓ and αℓ thereof, it is regarded that a braking force greater than a required level is applied to the driven wheels RR and RL so that the C port of the three position valve 23 is connected to the hydraulic system to increase the volume of the upper chamber of the cut valve 24 and to reduce the braking force to the driven wheels RR and RL (step 210).

Meanwhile, processes of steps 220 to 270 which are executed when it is discriminated at step 130 that the condition is not met are provided to set a delay time to control of the two position valve 33 toward discommunicating side and the second throttle valve 14 towards the side. As described hereinabove, when it is discriminated at step 130 that the condition is met, normally, the position of the second throttle valve 14 is operated towards the close the side so as to be capable of keeping the output power of the internal combustion engine 1 low and the two position valve 33 is driven which is normally at a pressure discommunicating side wherein the pressure of the accumulator 22 is not imparted to the pressure change-over valve 31, and thus the brake is rendered effective by the pressure of the accumulator 22. After then, the three position valve 23 is suitably actuated to accomplish traction control to obtain an optimum driving force in order to effect fine control of the braking force corresponding to variations of the rotational speed Vr and the acceleration αr of the driven wheels RR and RL.

If a negative decision is made at step 130 with the traction control mentioned above continued, the position of the second throttle valve 14 is operated towards the close side at steps 220 and 230. Namely, whether the rotational speed Vr has already been below the lower limit value Vℓ or not is tested (at step 220), if Vr < Vℓ , the DC motor 12 is operated in opposite rotation to that at step 150 mentioned above so as to operate the position of the second throttle valve 14 towards the open side at step 230 because such a judgment as being unnecessary is carried out to lower the output power of the internal combustion engine 1 down to the existing level. If Vr ≧ Vℓ , it is not necessary to change the position of the second throttle valve 14, thus the steps followed by step 240 will be carried out without the execution of step 230.

At steps 240 and 270, the switching of the two position valve 33 to the pressure discommunicating side is executed after the predetermined period of time. In other words, when the above-mentioned routine is executed again after the lapse of the predetermined period of time, if at step 130 it is discriminated that the rotational speed Vr of the driven wheels RR and RL is not over the upper limit value Vh therefor and the two position valve 33 is promptly changed over to the pressure discommunicating side, then the braking force which has acted upon the driven wheels RR and RL so far will disappear completely and thus vibrations due to such a control may be brought about to the vehicle.

Therefore, while two position valve 33 is held to the pressure communicating side to produce a braking force only for the predetermined period of time after it has been discriminated that the condition of step 130 is met no more, the braking force of the driven wheels RR and RL is controlled by the three position valve 23. Accordingly, if it is discriminated at step 130 that the condition if not met, then the control of the second throttle valve 14 has been completed, at first step 240 is executed to determine if the contents of the counter C which was set at step 150 are greater than zero or not, and if C > 0, then the counter C is decremented at step 250, and then if it is discriminated at step 260 that the new contents of the counter C are not zero, then the aforementioned steps including step 160 are executed again. However, if C = 0, it is regarded that the two position valve 33 is held to the pressure communicating side for the predetermined period of time so that control now proceeds to step 270 at which the two position valve 33 is changed over to the pressure discommunicating side to effect control of the next steps including 180 is executed without decrementing the counter C again in accordance with the discrimination at step 240.

Control of the two position valve 33 and the three position valve 23 which is executed in the control of the present step are illustrated in (C), (D) and (E) of Fig. 4. As shown in (C), (D) and (E) of Fig. 4, once the two position valve 33 is rendered operative, it effects transmission of pressure to produce a braking force until the car is brought to a stabilized accelerated condition due to a delay time Td of the two position valve 33, that is, the time preset by the counter C while the three position valve 23 suitably changes over the three ports thereof to adjust the braking force to execute the traction control.

As shown in (E) of Fig. 4, the output power of the internal combustion engine 1 is decreased in accordance with the decrease of the intake air amount when the rotational speed of driven wheels RR and RL becomes too high by controlling the position of the second throttle valve 14. On the contrary, it is increased in accordance with the increase of the intake air amount when the rotational speed becomes too low because of the braking force of the aforementioned brake mechanism.

In the embodiment mentioned above, the car speed sensor 60A and the wheel speed sensor 60B correspond to the slip detecting means I and what compares the output power of these sensors with the upper and lower limits of rotational speed Vr and acceleration $\alpha r$ of driven wheels RR and RL, then controls the rotation control means III, i.e., the second throttle valve 14 and the hydraulic system 20 of an anti-skid brake system, based on the compared results corresponds to the rotating force control means.

The present embodiment thus indicates an excellent example of constitution of a wheel slip controlling system which can attain traction control during acceleration of a vehicle as shown in (A) of Fig. 4 only by additionally providing a hydraulic controlling system 30 and the second throttle valve 14 for traction control as described above.

In other words, if a hydraulic system of an anti-skid brake system which is conventionally installed on a vehicle is utilized and a constant braking force is provided to driven wheels by means of a newly provided hydraulic system, then the braking force is thereafter regulated by the same control with the anti-skid brake system. Besides, even if the same electronic controlling device 90 with the anti-skid brake system is used, since a slip controlling routine as illustrated in Fig. 3 is executed during acceleration of the vehicle whereas another slip controlling routine for known anti-skid braking (not shown) is executed during deceleration, the same electronic controlling device is used commonly and thus a control system having good operability can be constructed. Moreover, since the hydraulic control of the anti-skid brake system is designed to allow finer pressure control than a conventional one, fine traction control can be attained readily.

It is possible to reduce the hydraulic system 20 and 30 in size and weight as the output power of the internal combustion engine 1 is also controlled by the second throttle valve 14 at that time, therefore, the necessary braking force for traction control is minimized. In addition, the fuel consumption is improved and exothermic of the brake system which gives braking force is prevented because no extra fuel is supplied to the internal combustion engine 1 when the braking force is generated.

As a whole, the traction control with the good efficiency can be achieved, employing the braking hydraulic system 20 in accordance with the hydraulic pressure for quick response and the second throttle valve 14 for controlling the rotation in comparatively longer period, respectively.

It is to be noted that while in the present embodiment control of the braking force is all accomplished by the common three position valve 23 of the anti-skid brake system i.e. the braking hydraulic system 20, in order to simply attain such excellent effects as described above, the two position valve 33 may otherwise be replaced by a three position valve which is controlled to regulate the tracking hydraulic pressure itself which is provided to the pressure change-over valve 31. Control of the three position valve 23 in the latter case may be one which execute substantially the same routine as that of Fig. 3, and when the rotational speed Vr and acceleration $\alpha r$ of driven wheels RR and RL both exceed the respective upper limit values therefor, the pressure of the accumulator 22 may be imparted to the pressure change-over valve 31, but when they are both lower than the respective lower limit values therefor, the pressure of the accumulator 22 may be reduced and when in any conditions, the braking force may be maintained constant.

Now, a second embodiment will be described wherein the electronic controlling device 90 is constructed from electronic circuits without using a microcomputer. The second embodiment has, in hardware, a circuitry construction as illustrated in Fig. 5.

Referring to Fig. 5, reference symbols 90B-1 and 90B-2 denote F/V converters for converting a frequency of pulse signals developed from left and right idle wheel speed sensors 60A-1 and 60A-2 and corresponding to rotations of idle wheels into a voltage signal, respectively, reference symbol 90B-3 designates an adder for adding the thus converted voltage signal to obtain a voltage Bf corresponding to the travelling speed of the vehicle (hereinafter referred to as a vehicle speed voltage), 90B-4 a differentiator for differentiating the vehicle speed voltage Bf to obtain a voltage Bf corresponding to an acceleration of the vehicle (hereinafter referred to as a vehicle acceleration voltage), and 90B-5 a comparator for comparing the vehicle acceleration voltage Bf with the ground voltage (0 volt) to determine if the vehicle is being accelerated or not.

Further, reference symbol 90B-6 denotes an F/V converter for converting a frequency of pulse signals developed from the wheel speed sensor 60B into a voltage signal, 90B-7 an amplifier for amplifying the voltage signal from the F/V converter 90B-6 to a voltage corresponding to the vehicle speed voltage Bf obtained from the adder 90B-3 to obtain a driven wheel speed voltage Br indicative of the rotational speed Vr of driven wheels RR and RL, and 90B-8 a differentiator for differentiating the driven wheel speed voltage Br to output a driven wheel acceleration voltage Br.

In addition, reference symbols 90B-9 and 90B-10 denote adders for adding predetermined voltages B1 and B2 to the vehicle speed voltage Bf developed from the adder 90B-3 and corresponding to the travelling speed of the vehicle to output reference voltages Bf1 and Bf2 for determination of a degree of an acceleration slip of the vehicle, respectively, 90B-11 and 90B-12 comparators for comparing the reference voltages Bf1 and Bf2 output from the adders 90B-9 and 90B-10 with the driven wheel speed voltage Br output form the amplifier 90B-7 to output voltage signals Bf and Bfh of a high level when Bf1 ≦ Br and Bf2 ≦ Br, respectively, and 90B-13 and 90B-14 further comparators for comparing the driven wheel acceleration voltage Br output from the differentiator 90B-8 with predetermined voltages B3 and B4 to output voltage signals Br and Brh of a high level when Br ≧ B3 and Br ≧ B4, respectively.

The voltage signals Bfℓ and Brℓ output from the comparators 90B-11 and 90B-13 are input to an AND circuit 90B-15. A voltage signal Bℓ output from the AND circuit 90B-15 is input to another AND circuit 90B-30 at the next stage, and a signal Bℓ' output from the AND circuit 90B-30 is provided via an amplifier 90B-16 to the base of a transistor Tr1 as a controlling signal for changing over the three position valve 23 to the A port or to the C port. The voltage signals Bfh and Brh output from the comparators 90B-12 and 90B-14, respectively, are input to a further AND circuit 90B-17, and a signal from the hydraulic switch 27 is also input to the AND circuit 90B-17 via a NOT circuit 90B-18. A voltage signal Bh output form the AND circuit 90B-17 is input to a yet further AND circuit 90B-31 from which a voltage signal Bh' is output. The voltage signal Bh' is applied via an amplifier 90B-19 to the base of another transistor Tr2 as a controlling signal for changing over the three position valve 23 to the B port. Further, an output of an AND circuit 90B-21 is input via the AND circuits 90B-30 and 90B-31 to the amplifiers 90B-19 and 90B-16, respectively. Accordingly, the three position valve 23 is normally controlled to the A port.

Meanwhile, a voltage signal which is output from the comparator 90B-5 and indicates that the vehicle is in an accelerating condition, another voltage signal output from the comparator 90B-12 via a delay circuit 90B-20 and a further voltage signal output from the hydraulic switch 27 via the NOT circuit 90B-18 are input to an AND circuit 90B-21. An output terminal of the AND circuit 90b-21 is connected to provide an actuating signal an amplifier 90B-22 via the two position valve 33.

It is apparent that the circuit construction as described above can attain such control of the two position valve 33 and the three position valve 23 as seen in Fig. 4. In particular, the delay circuit 90B-20 corresponds to means for producing a delay of control of the counter C provided by the above described steps 240 to 270 while a signal amplified by the amplifier 90B-19 corresponds to results of determination provided by step 180 and a signal amplified by the amplifier 90B-16 corresponds to the process at step 290.

Further, it is constituted so as to operate the DC motor 12 in the normal direction (The position of the second throttle valve is operated towards the close side.) by the amplifier 90B-24 which amplifies the output power of the comparator 90B-12, provide a NOT circuit 90B-25 for denying the output of the comparator 90B-11 which is amplified by an amplifier 90B-26 so as to operate the DC motor 12 in the opposite direction. Thus, as shown in (E) of Fig. 4, when the rotational speed Vr of driven wheels RR and RL has exceeded the upper limit, the position of the second throttle valve 14 is operated towards the close side. Contrarily, it is operated towards the open side when it has fallen below the lower limit. In this manner, the components of the embodiments described above may be suitably chosen without departing from the scope of the present invention.

## Claims

**1.** A wheel slip controlling system for a vehicle, comprising:

(a) braking means (50, 51, M2) operable by a driver of a car for braking rotation of driven wheels (M1),

(b) slip detecting means (60A, 60B, 90, M3) for detecting a slipping condition of wheels at least including the driven wheels (M1) to output a slip signal indicative of the slipping condition,

(c) anti-skid controlling means (20, 30, M4) for receiving said slip signal indicative of the slipping condition and controlling the pressure to be imparted from said braking means (50, 51, M2) to control braking slips of said wheels at least including said driven wheels (M1),

(d) traction controlling means (90, M8) responsive to the slip signal output from said slip detecting means (60A, 60B, 90, M3) during the acceleration of said vehicle to control an acceleration slip of said driven wheels (M1),

**said wheel slip controlling system being characterized in that**

(e) a second throttle valve (14, M7) is placed at an intake air path in which is also provided a first throttle valve (10, M6) interlocked to an acceleration increase means (9, M5), and

(f) said traction controlling means (90, M8) controls both said second throttle valve (14, M7) to vary the engine output torque and the hydraulic pressure of said anti-skid control means (20, 30, M4), in accordance with the slip signal so as to control an acceleration slip.

**2.** A wheel slip controling system for a vehicle according to claim 1, being characterized in that said braking means (50, 51, M2) includes

(a1) a brake pedal (50) adapted to be actuated by operation of a driver of the vehicle, and

(a2) a master cylinder (51) for providing a pressure corresponding to an extent of actuation of said brake pedal (50) to said anti-skid controlling means (20, 30, M4).

**3.** A wheel slip controlling system for a vehicle according to claim 1, being characterized in that said slip detecting means (60A, 60B, 90, M3) includes

(b1) a first sensor (60B) for detecting the speed of said driven wheels (M1), and

(b2) a second sensor (60A) for detecting the speed of the vehicle.

**4.** A wheel slip controlling system for a vehicle according to claim 1, being characterized in that said anti-skid controlling means (20, 30, M4) includes

(c1) a hydraulic source (21, 22, 26) for storing, actuating and accumulating hydraulic pressure oil,

(c2) a magnetic change-over valve (23) connected to said hydraulic source (21, 22, 26) and having three changed over positions wherein it increases the hydraulic pressure at an A port thereof, it holds the hydraulic pressure at a B port thereof, and it reduces the hydraulic pressure at a C port to adjust the braking force,

(c3) a valve (24, 25) regulating a hydraulic pressure either from said hydraulic source (21, 22, 26) or said braking means (50, 51, M2) with pressure oil from said magnetic change-over valve (23), and

(c4) a changing over device (30) including a change-over valve (33) adapted to be changed over in response to signal from said traction controlling means (90, M8), and a pressure change-over valve (31) for receiving the hydraulic pressure from said change-over valve (33) via a cylinder (32) and the hydraulic pressure from said master cylinder (51) to output a higher one of the hydraulic pressures to said valve (24, 25).

**5.** A wheel slip controlling system for a vehicle according to claim 4, being characterized in that said traction controlling means (90, M8) includes

(d1) means for changing over said magnetic change-over valve (23) to said A port when the driven wheel speed (Vr) and the driven wheel acceleration which is obtained by differentiation of the driven wheel speed (Vr) exceed a first upper limit value (Vh) and a second upper limit value ($\alpha h$), respectively, to increase the hydraulic pressure to be imparted to said driven wheels (M1),

(d2) means for changing over said magnetic change-over valve (23) to said B port when the driven wheel speed (Vr) and the driven wheel acceleration both exceed a first lower limit value (Vl) and a second lower limit value ($\alpha l$), respectively, to hold the hydraulic pressure to be imparted to said driven wheels (M1), and

(d3) means for changing over said magnetic change-over valve (23) to said C port when the driven wheel speed (Vr) and the driven wheel acceleration are of values other than in (d1) and (d2) to reduce the hydraulic pressure to be imparted to said driven wheels (M1).

**6.** A wheel slip controlling system for a vehicle according to claim 1, being characterized in that said traction controlling means (90, M8)

(d4) controls a change-over valve (33) so as to impart the pressure of an accumulator (22) to a pressure change-over valve (31) when the driven wheel speed (Vr) exceeds a predetermined value whereas it delays such impartation on the pressure for a predetermined period of time and then stops the same when the driven wheel speed (Vr) becomes lower than the predetermined value, said predetermined period of time being set by means of a counter (C) whereas it is decremented for each processing.

**7.** A wheel slip controlling system for a vehicle according to claim 1, being characterized in that said traction controlling means (90, M8) includes
(f1) means for operating the position of the second throttle valve (14) from the full open to the full close position when the driven wheel speed (Vr) has exceeded the upper limit value (Vh),
(f2) means for operating the position of the second throttle valve (14) from the full close to the full open position when the driven wheel speed (Vr) has fallen below the lower limit value (Vc),
(f3) means for holding a state when the position of the second throttle valve (14) is at the full close or the full open position.

**8.** A wheel slip controlling system for a vehicle according to claim 7, being characterized in that said traction controlling means (90, M8) includes
(f4) a direct current motor (12) which drives the second throttle valve (14).

**Patentansprüche**

**1.** Radschlupfregelsystem für ein Fahrzeug, mit
(a) einer von dem Fahrer des Fahrzeugs betätigbaren Bremsvorrichtung (50, 51, M2) zum Bremsen der Drehung von angetriebenen Rädern (M1),
(b) einer Schlupfdetektoreinrichtung (60A, 60B, 90, M3), die einen Schlupfzustand von Rädern, zumindest einschließlich der angetriebenen Räder (M1) erfaßt, um ein den Schlupfzustand anzeigendes Schlupfsignal abzugeben,
(c) einer Antiblockierregeleinrichtung (20, 30, M4), die das den Schlupfzustand anzeigende Schlupfsignal aufnimmt und den von der Bremsvorrichtung (50, 51, M2) aufzubringenden Druck steuert, um die Bremsschlupfzustände an den Rädern, zumindest einschließlich der angetriebenen Räder (M1) zu regeln, und
(d) einer Antriebsschlupfregeleinrichtung (90, M8), die während der Beschleunigung des Fahrzeugs auf das von der Schlupfdetektoreinrichtung (60A, 60B, 90, M3) abgegebene Schlupfsignal während der Beschleunigung des Fahrzeugs anspricht, um einen Beschleunigungsschlupf der angetriebenen Räder (M1) zu regeln,
wobei das Radschlupfregelsystem **dadurch gekennzeichnet** ist, daß
(e) in einem Ansaugluftweg, in dem auch eine mit einer Beschleunigungsvorrichtung (9, M5) gekoppelte erste Drosselklappe (10, M6) angebracht ist, eine zweite Drosselklappe (14, M7) angeordnet ist und
(f) die Antriebsschlupfregeleinrichtung (90, M8) sowohl die zweite Drosselklappe (14, M7) zum Ändern des Maschinenausgangsdrehmoments als auch den Hydraulikdruck der Antiblockierregeleinrichtung (20, 30, M4) entsprechend dem Schlupfsignal steuert, um einen Beschleunigungsschlupf zu steuern.

**2.** Radschlupfregelsystem für ein Fahrzeug nach Anspruch 1, **dadurch gekennzeichnet,** daß die Bremsvorrichtung (50, 51, M2)
(a1) ein von dem Fahrer des Fahrzeugs betätigbares Bremspedal (50) und
(a2) einen Hauptzylinder (51) enthält, der der Antiblockierregeleinrichtung (20, 30, M4) einen dem Ausmaß der Betätigung des Bremspedals (50) entsprechenden Druck liefert.

**3.** Radschlupfregelsystem für ein Fahrzeug nach Anspruch 1, **dadurch gekennzeichnet,** daß die Schlupfdetektoreinrichtung (60A, 60B, 90, M3)
(b1) einen ersten Sensor (60B) zum Erfassen der Geschwindigkeit der angetriebenen Räder (M1) und
(b2) einen zweiten Sensor (60A) zum Erfassen der Geschwindigkeit des Fahrzeugs enthält.

**4.** Radschlupfregelsystem für ein Fahrzeug nach Anspruch 1, **dadurch gekennzeichnet,** daß das Antiblockierregelsystem (20, 30, M4)
(c1) eine Hydraulikquelle (21, 22, 26) zum Speichern, Schalten und Sammeln von Hydraulikdrucköl,
(c2) ein magnetisches Umschaltventil (23), das an die Hydraulikquelle (21, 22, 26) angeschlossen ist und das drei Umschaltstellunqen hat, wobei es bei einer A-Stellung desselben den Hydraulikdruck erhöht, bei einer B-Stellung desselben den Hydraulikdruck aufrechterhält und bei einer C-Stellung desselben den Hydraulikdruck verringert, um die Bremskraft einzustellen,
(c3) ein Ventil (24, 25), das einen Hydraulikdruck entweder aus der Hydraulikquelle (21, 22, 26) oder aus der Bremsvorrichtung (50, 51, M2) mit Drucköl aus dem magnetischen Umschaltventil (23) regelt, und
(c4) eine Umschaltvorrichtung (30) mit einem Umschaltventil (33), das im Ansprechen auf das Signal aus der Antriebsschlupfregeleinrichtung (90, M8) umstellbar ist, und mit einem Druckumschaltventil (31) enthält, die über einen Zylinder (32) den Hydraulikdruck aus dem Umschaltventil (33) und den Hydraulikdruck aus dem Hauptzylinder (51) aufnimmt, um einen höheren der Hydraulikdrücke an das Ventil (24, 25) abzugeben.

**5.** Radschlupfregelsystem für ein Fahrzeug nach Anspruch 4, **dadurch gekennzeichnet,** daß die Antriebsschlupfregeleinrichtung (90, M8)
(d1) eine Einrichtung, die das magnetische Umschaltventil (23) auf die A-Stellung umstellt, wenn jeweils die Antriebsradgeschwindigkeit (Vr) und die Antriebsradbeschleunigung, die durch Differenzieren der Antriebsradgeschwindigkeit (Vr) erhalten wird, einen ersten oberen Grenzwert (Vh) bzw. einen zweiten oberen Grenzwert ($\alpha$h) übersteigt, zum Erhöhen des an den angetriebenen Rädern (M1) aufzubringenden Hydraulikdrucks,
(d2) eine Einrichtung, die das magnetische Umschaltventil (23) auf die B-Stellung umstellt, wenn jeweils die Antriebsradgeschwindigkeit (Vr) und die Antriebsradbeschleunigung beide einen ersten unteren Grenzwert (V1) bzw. einen zweiten unteren Grenzwert ($\alpha$1) überschreiten, zum Aufrechterhalten des an den angetriebenen Rädern (M1) aufgebrachten Hydraulikdrucks, und
(d3) eine Einrichtung aufweist, die das magnetische Umschaltventil (23) auf die C-Stellung umstellt, wenn die Antriebsradgeschwindigkeit (Vr) und die Antriebsradbeschleunigung andere Werte als gemäß (d1) und (d2) haben, zum Verringern des an den angetriebenen Rädern (M1) aufgebrachten Hydraulikdrucks.

**6.** Radschlupfregelsystem für ein Fahrzeug nach Anspruch 1, **dadurch gekennzeichnet,** daß die Antriebsschlupfregeleinrichtung (90, M8)
(d4) ein Umschaltventil (33) derart steuert, daß der Druck eines Speichers (22) an ein Druckumschaltventil (31) angelegt wird, wenn die Antriebsradgeschwindigkeit (Vr) einen vorbestimmten Wert übersteigt, wogegen sie dieses Anlegen des Druckes über eine vorbestimmte Zeitdauer verzögert und dann das Anlegen abbricht, wenn die Antriebsradgeschwindigkeit (Vr) niedriger als der vorbestimmte Wert wird, wobei die vorbestimmte Zeitdauer mittels eines Zählers (C) bestimmt ist, während dieser für jeden Prozeßschritt abgestuft wird.

**7.** Radschlupfregelsystem für ein Fahrzeug nach Anspruch 1, **dadurch gekennzeichnet,** daß die Antriebsschlupfregeleinrichtung (90, M8)
(f1) eine Einrichtung, die die zweite Drosselklappe (14) aus der Vollöffnungsstellung auf die Vollschließstellung verstellt, wenn die Antriebsradgeschwindigkeit (Vr) den oberen Grenzwert (Vh) übersteigt,
(f2) eine Einrichtung, die die zweite Drosselklappe (14) aus der Vollschließstellung zu der Vollöffnungsstellung verstellt, wenn die Antriebsradgeschwindigkeit (Vr) unter den unteren Grenzwert(Vc) abfällt, und
(f3) eine Einrichtung aufweist, die einen Zustand aufrechterhält, wenn die zweite Drosselklappe (14) auf die Vollschließstellung oder die Vollöffnungsstellung eingestellt ist.

**8.** Radschlupfregelsystem für ein Fahrzeug nach Anspruch 7, **dadurch gekennzeichnet,** daß die Antriebsschlupfregeleinrichtung (90, M8)
(f4) einen Gleichstrommotor (12) enthält, der die zweite Drosselklappe (14) verstellt.

## Revendications

**1.** Système de contrôle du patinage des roues d'un véhicule, comprenant:
(a) des moyens de freinage (50, 51, M2) pouvant être actionnés par le conducteur d'une automobile pour freiner la rotation des roues motrices (M1),
(b) des moyens de détection de patinage (60A, 60B, 90, M3) pour détecter une condition de patinage des roues comprenant au moins les roues motrices (M1) pour émettre en sortie un signal de patinage indiquant la condition de patinage,
(c) des moyens de commande d'antipatinage (20, 30, M4) pour recevoir ledit signal de patinage indicatif de la condition de patinage et commandant la pression à transmettre par lesdits moyens de freinage (50, 51, M2) pour contrôler le freinage pendant le patinage desdites roues qui comprennent au moins les roues motrices (M1),
(d) des moyens de commande de traction (90, M8) sensibles au signal de patinage émis en sortie par lesdits moyens de détection de patinage (60A, 60B, 90, M3) pendant l'accélération du véhicule pour contrôler le patinage pendant l'accélération desdites roues motrices (M1),

le système de contrôle de patinage des roues étant caractérisé en ce que
(e) une seconde vanne régulatrice à papillon (14, M7) est montée dans le parcours d'admission d'air dans lequel est également prévue une première vanne régulatrice à papillon (10, M6) reliée à des moyens d'augmentation d'accélération (9, M5), et en ce que
(f) lesdits moyens de commande de traction (90, M8) commandent à la fois la seconde vanne régulatrice à papillon (14, M7) pour modifier le couple de sortie du moteur et la pression hydraulique des moyens de commande d'antipatinage (20, 30, M4) en accord avec le signal de patinage de manière à contrôler le patinage pendant l'accélération.

**2.** Système de contrôle du patinage des roues d'un véhicule selon la revendication 1, caractérisé en ce que lesdits moyens de freinage (50, 51, M2) comprennent
(a1) une pédale de frein (50) adaptée pour être actionnée par le conducteur du véhicule, et
(a2) un maître-cylindre (51) pour fournir une pression correspondant à l'importance de l'action appliquée à ladite pédale de frein (50) auxdits moyens de commande d'antipatinage (20, 30, M4).

**3.** Système de contrôle du patinage des roues d'un véhicule selon la revendication 1, caractérisé en ce que lesdits moyens de détection de patinage (60A, 60B, 90, M3) comprennent
(b1) un premier capteur (60B) pour détecter la vitesse desdites roues motrices (M1) et
(b2) un second capteur (60A) pour détecter la vitesse du véhicule.

**4.** Système de contrôle du patinage des roues d'un véhicule selon la revendication 1, caractérisé en ce que lesdits moyens de commande d'antipatinage (20, 30, M4) comprennent
(c1) une source hydraulique (21, 22, 26) pour stocker, mettre en oeuvre et accumuler l'huile hydraulique de pression,
(c2) une soupape de commutation magnétique (23) reliée à ladite source hydraulique (21, 22, 26) et comprenant trois positions de commutation par lesquelles elle augmente la pression hydraulique à un orifice A de ses orifices, elle maintient la pression hydraulique à un orifice 8 et elle réduit la pression hydraulique à un orifice C pour ajuster la force de freinage,
(c3) une soupape (24, 25) régulant la pression hydraulique provenant soit de la source hydraulique (21, 22, 26) soit des moyens de freinage (50, 51, M2) par la pression d'huile provenant de la soupape de commutation magnétique (23), et
(c4) un dispositif de commutation (30) comprenant une soupape de commutation (33) adaptée à commuter en réponse au signal provenant des moyens de commande de traction (90, M8), et une soupape de commutation de pression (31) pour recevoir la pression hydraulique de la soupape de commutation (33) par l'intermédiaire d'un cylindre (32) et la pression hydraulique provenant du maître-cylindre (51) pour appliquer une des pressions hydrauliques la plus élevée aux soupapes (24, 25).

**5.** Système de contrôle du patinage des roues d'un véhicule selon la revendication 4, caractérisé en ce que lesdits moyens de commande de traction (90, M8) comprennent
(d1) des moyens pour commuter ladite soupape de commutation magnétique (23) sur ledit orifice A quand la vitesse (Vr) de la roue motrice et l'accélération de la roue motrice qui est obtenue par différenciation de la vitesse (Vr) de la roue motrice dépassent respectivement une première valeur limite supérieure (Vh) et une seconde limite supérieure ($\alpha$h) pour augmenter la pression hydraulique à transmettre aux roues motrices (M1),
(d2) des moyens pour commuter la soupape de commutation magnétique (23) sur ledit orifice B quand la vitesse (Vr) de la roue motrice et l'accélération de la roue motrice dépassent toutes les deux une première valeur limite inférieure (Vl) et une seconde valeur limite inférieure ($\alpha$l), respectivement, pour maintenir la pression hydraulique à transmettre aux roues motrices (M1), et
(d3) des moyens pour commuter ladite soupape de commutation magnétique (23) sur ledit orifice C quand la vitesse (Vr) de la roue motrice et l'accélération de la roue motrice sont à des valeurs autres que celles de (d1) et de (d2) pour réduire la pression hydraulique à transmettre auxdites roues motrices (M1).

**6.** Système de contrôle du patinage des roues d'un véhicule selon la revendication 1, caractérisé en ce que lesdits moyens de commande de traction (90, M8)

(d4) commandent une soupape de commutation (33) de manière à transmettre la pression d'un accumulateur (22) à une soupape de commutation de pression (31) quand la vitesse (Vr) des roues motrices dépasse une valeur prédéterminée et à retarder une telle transmission de pression pendant une période de temps prédéterminée puis à arrêter celle-ci quand la vitesse des roues motrices (Vr) devient inférieure à la valeur prédéterminée, ladite période de temps prédéterminée étant obtenue au moyen d'un compteur (C) qui est incrémenté à chaque traitement.

**7.** Système de contrôle du patinage des roues d'un véhicule selon la revendication 1, caractérisé en ce que lesdits moyens de commande de traction (90, M8) comprennent

(f1) des moyens pour agir sur la position de la seconde vanne régulatrice à papillon (14) de manière qu'elle passe de la position totalement ouverte à la position totalement fermée quand la vitesse (Vr) des roues motrices a dépassé la valeur limite supérieure (Vh),

(f2) des moyens pour agir sur la position de la seconde vanne régulatrice à papillon (14) et la faire passer de la position totalement fermée à la position totalement ouverte quand la vitesse (Vr) des roues motrices est tombée au-dessous de la valeur limite inférieure (Vc),

(f3) des moyens pour maintenir un étant quand la position de la seconde vanne régulatrice à papillon (14) est dans la position totalement fermée ou dans la position totalement ouverte.

**8.** Système de contrôle du patinage des roues d'un véhicule selon la revendication 7, caractérisé en ce que lesdits moyens de commande de traction (90, M8) comprennent

(f4) un moteur à courant continu (12) qui actionne la seconde vanne régulatrice à papillon (14).

Fig. 1

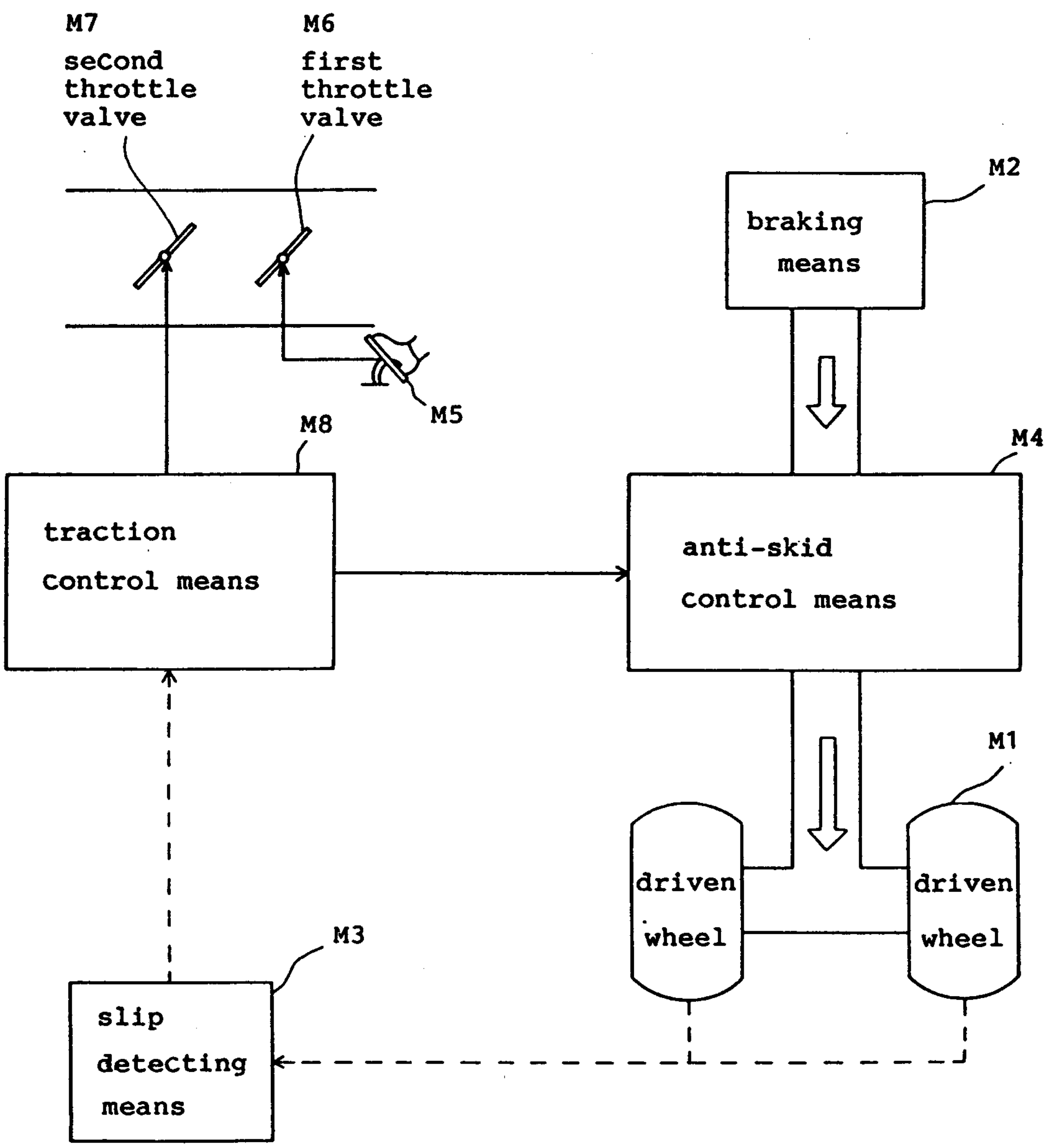
M7
second throttle valve
M6
first throttle valve
M2
braking means
M5
M8
M4
traction control means
anti-skid control means
M1
driven wheel
driven wheel
M3
slip detecting means

Fig. 2A

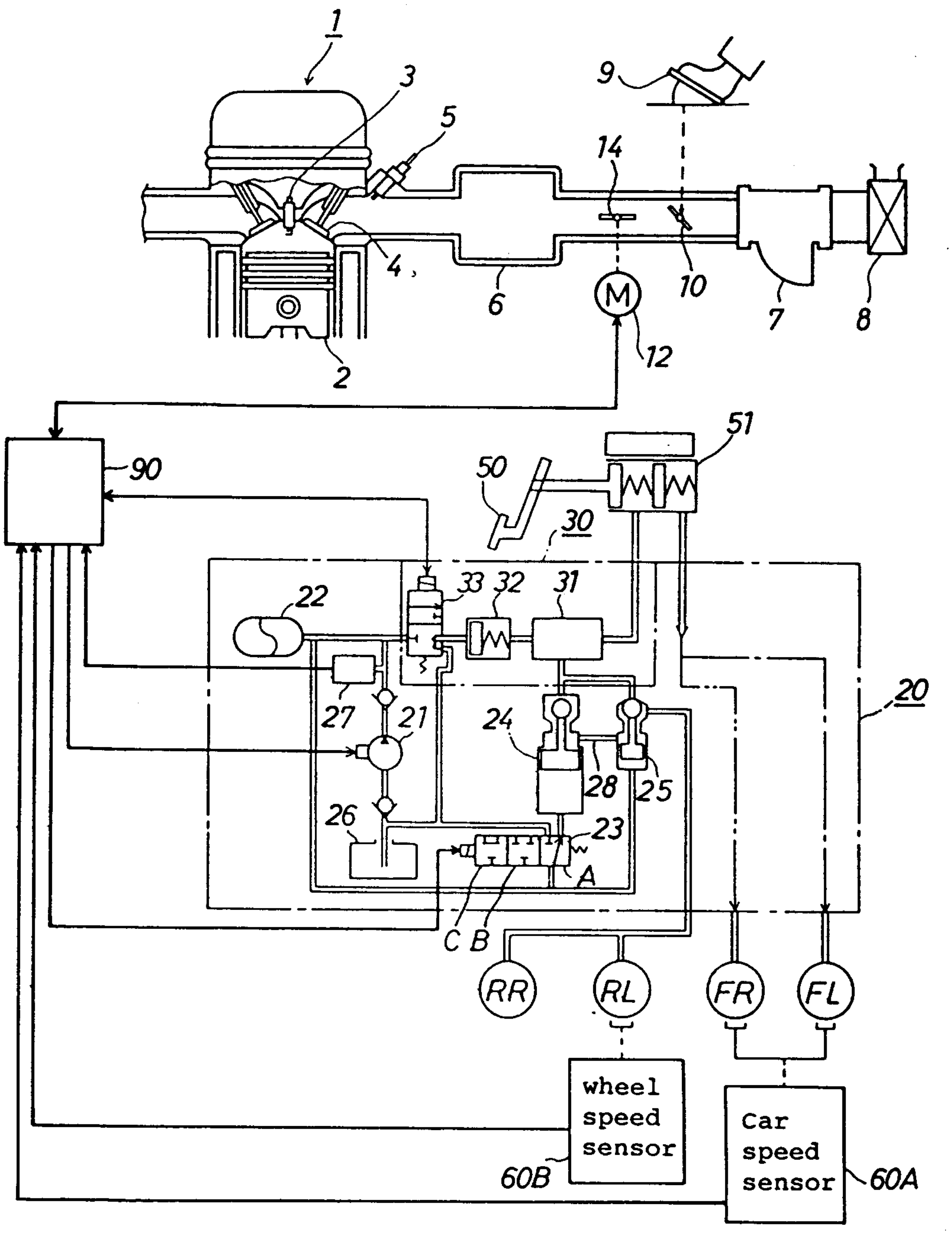
1
3
5
9
14
4
6
10
7
8
M
12
2
51
90
50
30
33
32
31
22
20
27
21
24
28
25
26
23
A
C
B
RR
RL
FR
FL
wheel
speed
sensor
60B
Car
speed
sensor
60A

Fig. 2B

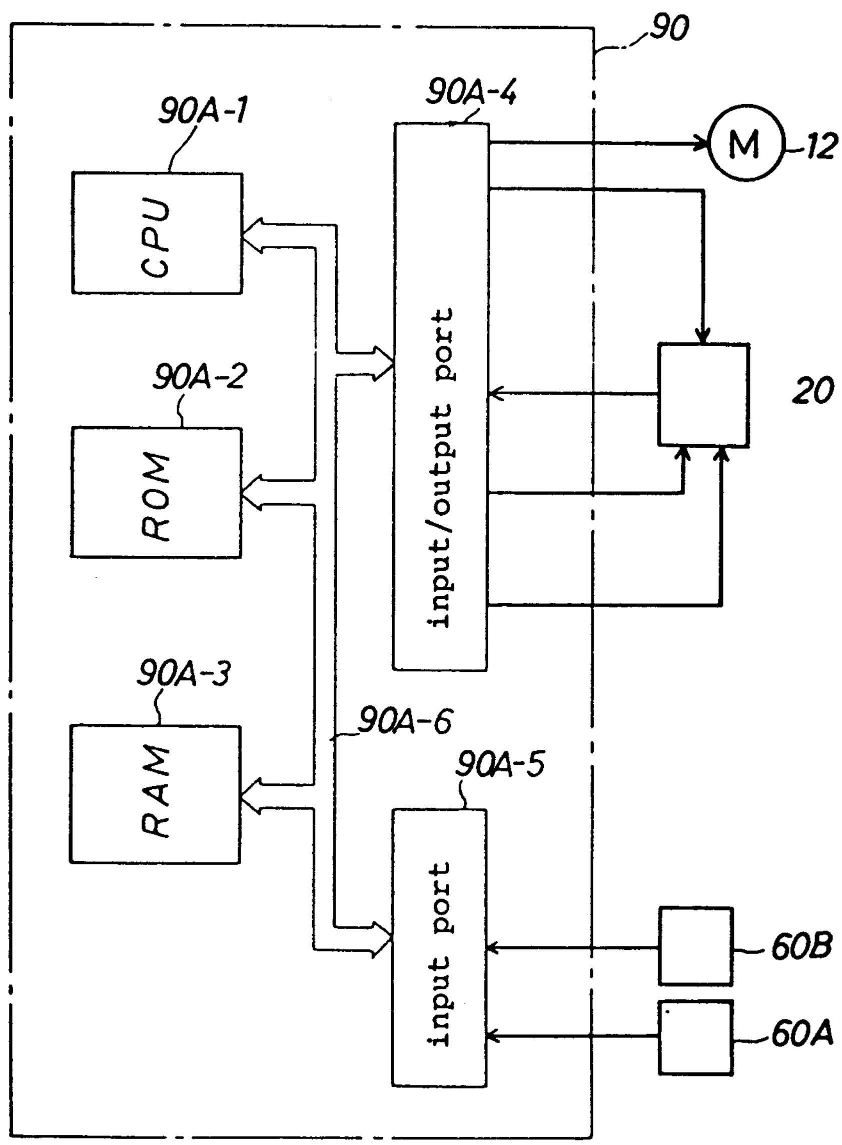
90
90A-1
CPU
90A-4
M
12
input/output port
90A-2
ROM
20
90A-3
RAM
90A-6
90A-5
input port
60B
60A

Fig.3A

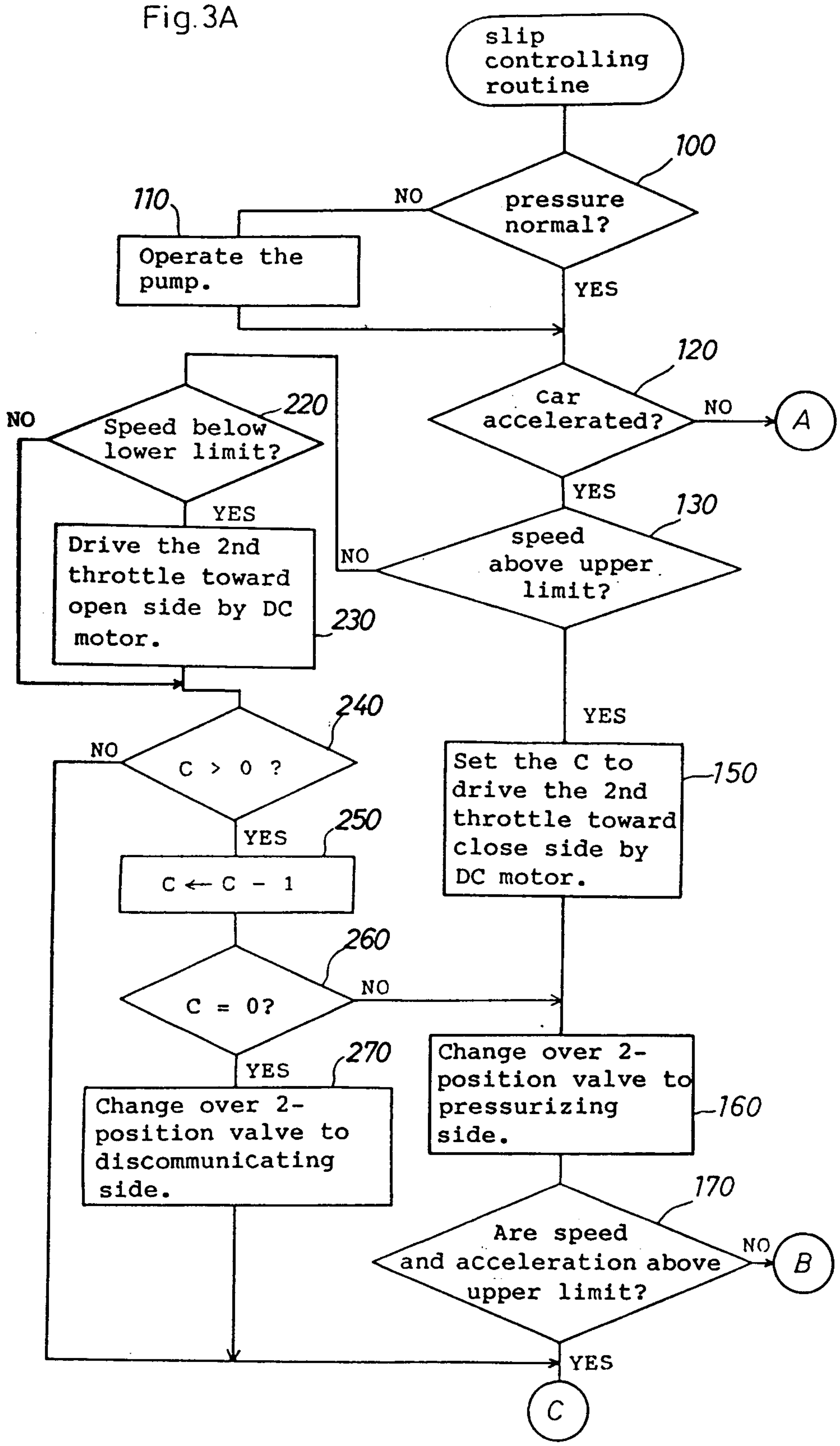
slip controlling routine
100
pressure normal?
NO
YES
110
Operate the pump.
120
car accelerated?
NO
A
YES
130
speed above upper limit?
NO
YES
220
Speed below lower limit?
NO
YES
Drive the 2nd throttle toward open side by DC motor.
230
240
C > 0 ?
NO
YES
250
C ← C − 1
260
C = 0?
NO
YES
270
Change over 2-position valve to discommunicating side.
Set the C to drive the 2nd throttle toward close side by DC motor.
150
Change over 2-position valve to pressurizing side.
160
170
Are speed and acceleration above upper limit?
NO
B
YES
C

Fig.3B

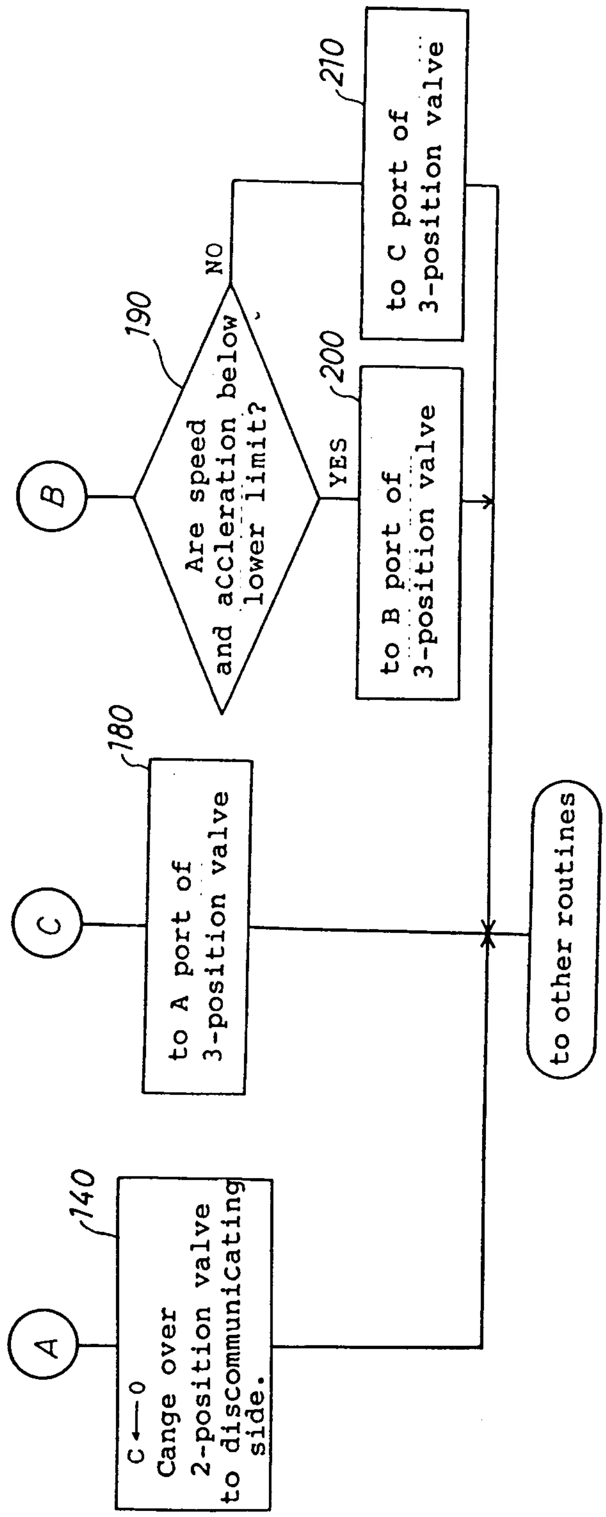
A
140
C ← 0
Cange over
2-position valve
to discommunicating
side.
C
180
to A port of
3-position valve
to other routines
B
190
Are speed
and acCleration below
lower limit?
YES
NO
200
to B port of
3-position valve
210
to C port of
3-position valve

Fig.4A

Fig.4B

Fig.4C

Fig.4D

Fig.4E

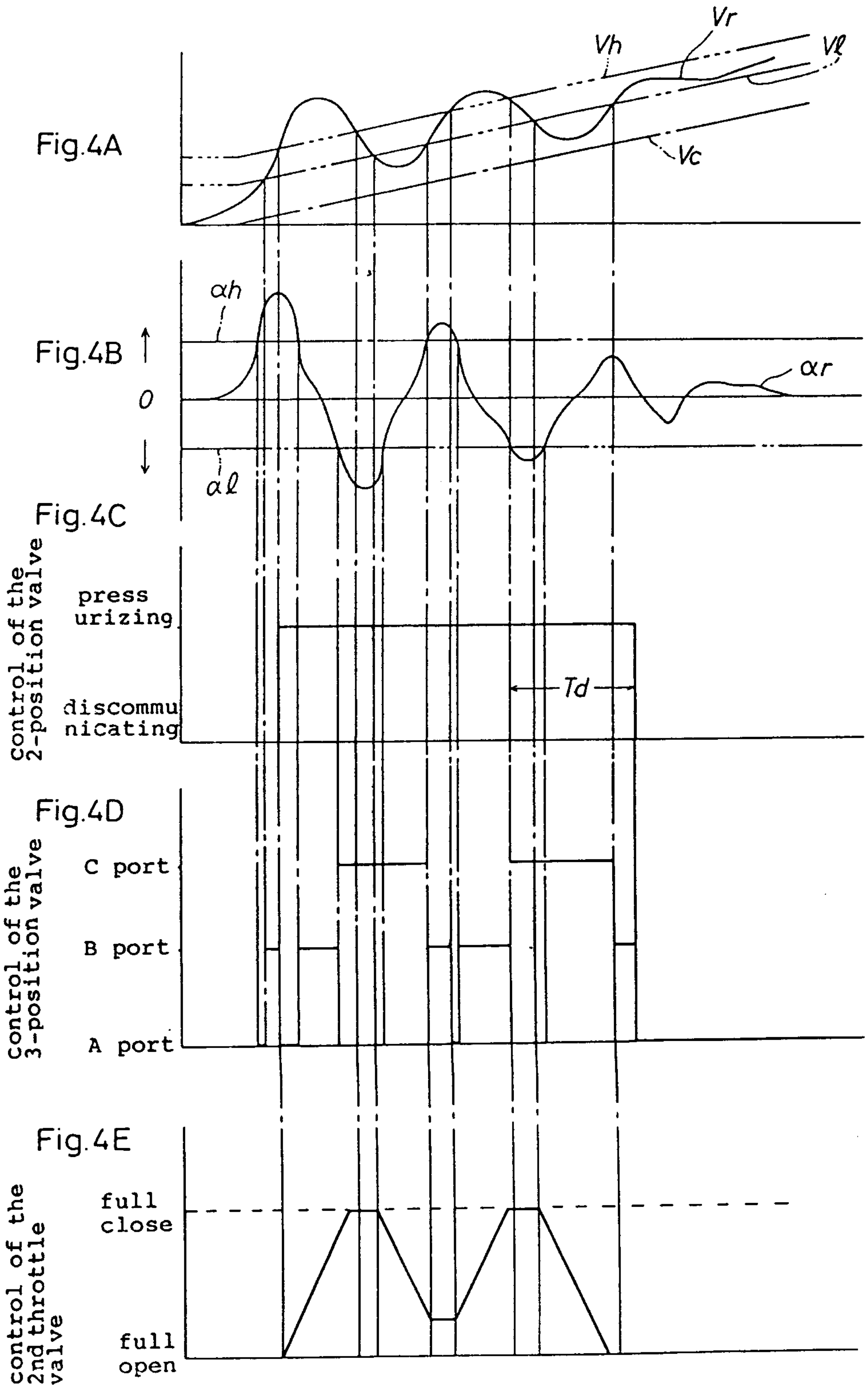

Fig. 5A

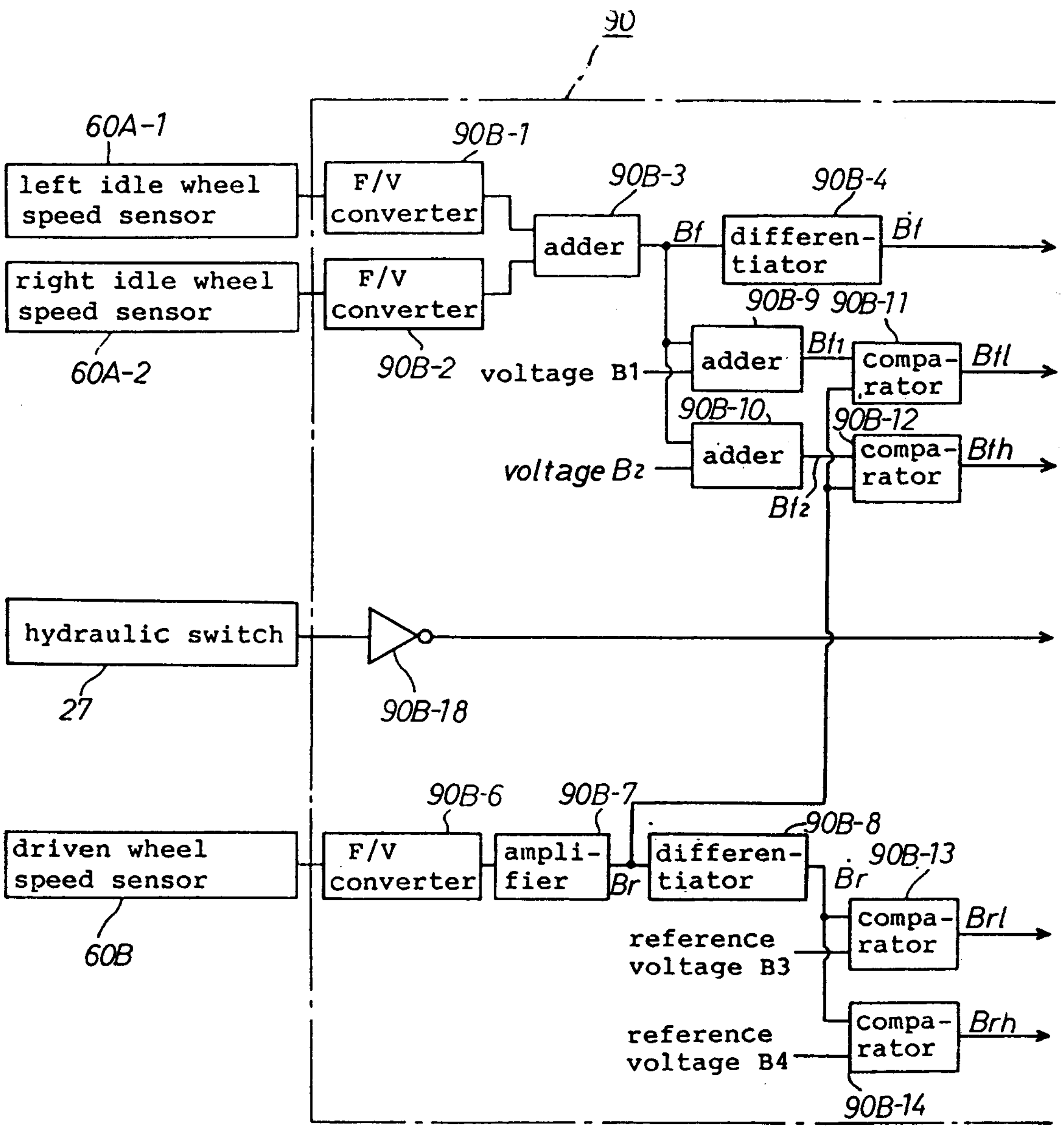
90
60A-1
left idle wheel speed sensor
right idle wheel speed sensor
60A-2
90B-1
F/V converter
F/V converter
90B-2
90B-3
adder
Bf
90B-4
differen-tiator
Ḃf
90B-9
90B-11
adder
Bf1
compa-rator
Bfl
voltage B1
90B-10
adder
voltage B2
Bf2
90B-12
compa-rator
Bfh
hydraulic switch
27
90B-18
90B-6
90B-7
90B-8
driven wheel speed sensor
60B
F/V converter
ampli-fier
Br
differen-tiator
Ḃr
90B-13
compa-rator
Brl
reference voltage B3
reference voltage B4
compa-rator
Brh
90B-14

Fig. 5B

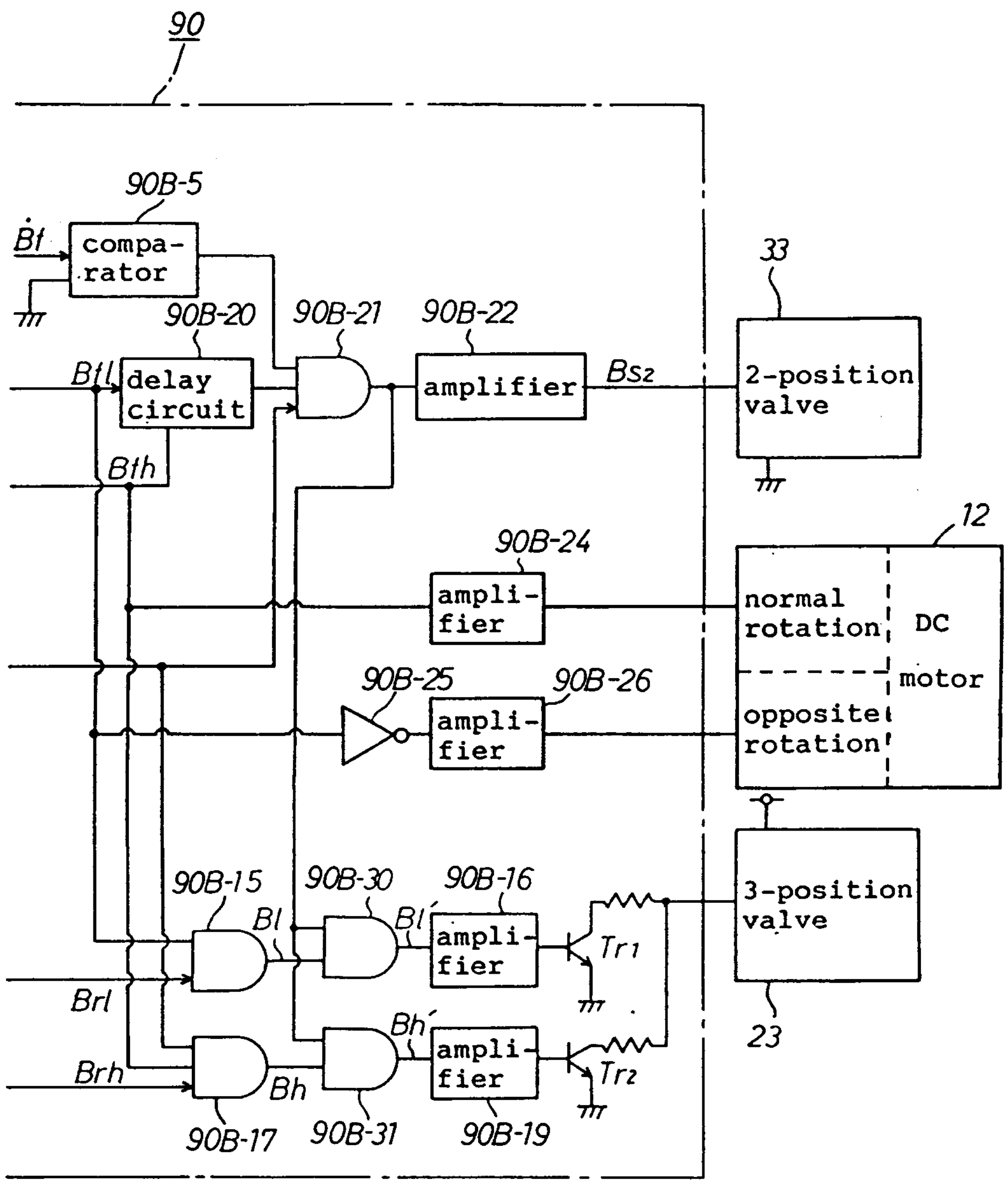
90
90B-5
Ḃf
compa-rator
90B-20
90B-21
90B-22
Bfl
delay circuit
amplifier
Bs2
33
2-position valve
Bfh
12
90B-24
ampli-fier
normal rotation
DC motor
90B-25
90B-26
ampli-fier
opposite rotation
90B-15
90B-30
90B-16
Bl
Bl′
ampli-fier
Tr1
3-position valve
Brl
Bh′
23
ampli-fier
Tr2
Brh
Bh
90B-17
90B-31
90B-19